# EUROPEAN PATENT APPLICATION

(11) **EP 1 752 375 A2**
(43) Date of publication of application: **14.02.2007**
(21) Application number: 06076474.3
(22) Date of filing: 10.10.2002
(51) Int. Cl.: B64C 27/35, F16F 1/393, B64C 27/32, F16F 1/38

(54) **Elastomeric bearing assembly with preloaded opposing conical bearing elements and method of forming the same**

(30) Priority: 10.10.2001 US 974991; 10.10.2001 US 975138
(62) Divisional of application: 02079223.0
(71) Applicant: The Boeing Company, Chicago, IL 60606-1596 (US)
(72) Inventor: Loftus, Robert T., Jr., Gilbert AZ 85296-1700 (US); Muylaert, Neal W., Apache Junction AZ 85219-9398 (US)
(74) Representative: Land, Addick Adrianus Gosling

(57) **Abstract**

A method is provided for producing an elastomeric conical flap bearing assembly for rotary aircraft including an inboard bearing element and outboard bearing element disposed within an outer housing. The outer housing has an outer surface configured with a plurality of radially extending flange elements. The outer housing has an inner surface configured to receive tapered conical bearing elements. A tapered conical elastomeric inboard bearing element is inserted into its outer housing and is bonded to the inner surface. A tapered conical elastomeric outboard bearing element is inserted into the outer housing, wherein the conical tapers of the respective bearing elements are directed in opposing directions. The bearing elements are press-fit together and the outer surface of the outboard bearing is bonded to the inner surface of the outer housing forming a bearing assembly. Simultaneously, an axial pre-load is applied to the bearing assembly. A plurality of bearing coupler lugs are attached to the bearing assembly.

## Description

### RELATED APPLICATION

This application incorporates "Insytallation of Internally preloaded Opposing Conical Elastomeric Bearing"

### Field of the Invention

This invention relates generally to elastomeric bearings and specifically to opposed internally pre-loaded conical elastomeric bearings.

### BACKGROUND OF THE INVENTION

A key component of a helicopter is the main rotor hub. It provides attachment of the main rotor blades during operation. Rotational power is delivered to the main rotor hub to provide rotational velocity to the blades in order to create aerodynamic lift. The main rotor hub must allow for rotational motion of the blades in the vertical (flap), horizontal (lead-lag), and axial (pitch) directions near the blade root attachment with the hub to accommodate flight control authority and dynamic stability. Main rotor hub systems that accommodate these motions with discrete hinge mechanisms are referred to as fully articulated hubs. Through out the history of the helicopter, engineers have struggled to provide these rotational freedoms with bearing systems that can accommodate high frequency and high amplitude oscillatory motion under high trust loading created by the centrifugal force of the rotating blades. Elastomeric bearings have become an industry standard for accommodating flap-wise motion in articulated hub systems. These bearings are composed of elastomeric material that allows for shear compliance within the elastomer, and for rotational freedom while reacting radial centrifugal force in compression.

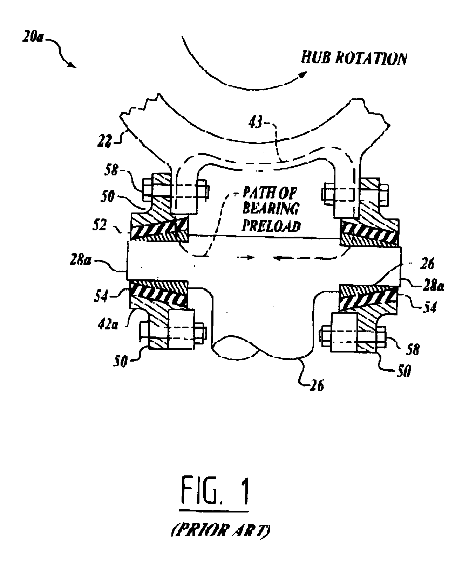

Elastomeric conical bearings are commonly used in bearing assemblies for helicopter rotor systems to accommodate rotor motion. The bearing assemblies are axially preloaded to prevent the conical bearing elements from experiencing a resultant tensional load. Currently, mono-directional bearing elements are employed at each attachment site of the main rotor hub. FIGURE 1 depicts a view of a prior art articulated hub assembly 20a. The hub assembly 20a includes a tire bar 26 connected to a hub center body 22. The tie bar 26 is connected to the center body 22 in a similar manner as disclosed in FIG.1, however, the bearing assembly 30a is substantially different. The bearing assembly 30 includes a pair of conical bearing elements 52 contacting the journal 28 on the bearing's inner surface 52 and the outer bearing surface is contained within an outer housing 42a. Each bearing element is a mono-directional single conical taper bearing having an elastomeric element 54 contained within. The conical bearings are arranged such that the apex of the conical elements extends radially outward from one another. The bearing arrangement yields a force couple that extends from one bearing to the other. The force couple yields a bearing pre-load path 43 extending through the hub center body 22.

The prior art design creates an extended force couple resulting in a bearing pre-load path extending through the main rotor hub center body. The hub center body must be designed to carry the extra loading. The extra design requirements add weight to the overall rotor hub reducing the aircraft's load capacity and fuel efficiency.

### Summary of the Invention

The invention provides a weight-reducing bearing assembly for rotary aircraft. An opposed tapered conical elastomeric flap bearing assembly for rotary aircraft includes an outer housing having an outer surface and an inner surface. The outer surface is configured to mechanically connect the bearing assembly to the attachment sections of the hub center body. The inner surface is configured to receive a pair of opposed taper conical bearing elements. An inboard bearing element and an outboard bearing element are located within the outer housing. The bearing elements are arranged in an opposed manner. An axial pre-load can be applied to the opposed bearing assembly wherein the resulting force couple bearing pre-load path is maintained entirely within the bearing assembly. Consequently, the weight of the main rotor hub is reduced increasing the efficiency of rotary flight.

The proposed invention provides a unique flap bearing arrangement by localizing the pre-load within each flap bearing assembly and, thus, eliminates the necessity for the transfer of the pre-load through the hub structure. The elimination of bearing pre-load through the hub structure can significantly reduce weight of the rotor hub assembly. Many components, including the bearing attachment flanges on the hub center body as well as the bearing housings can be configured to accommodate only the design flight and static loads without having to carry the off axis bearing pre-loads. The unique design of the instant invention yields an approximate 6% - 10% weight reduction in the main rotor hub assembly.

### Brief Description of the Drawings

The preferred and alternative embodiments of the present invention are described in detail below with reference to the following drawings.
FIGURE 1 is a partially sectional isolated plan view of a prior art bearing assembly;
FIGURE 2 is an isometric view of an articulated hub assembly;
FIGURE 3 is a partially sectional isolated plan view of a bearing assembly of the instant invention;
FIGURE 4 is an exploded isometric view of the bearing assembly;
FIGURE 5 is an isometric view of the bearing assembly;
FIGURE 6 is an alternative isometric view of the bearing assembly;
FIGURE 7 is a partial sectional view of the bearing assembly; and
FIGURE 8 is a partial sectional view of the bearing assembly.

### DETAILED DESCRIPTION OF THE INVENTION

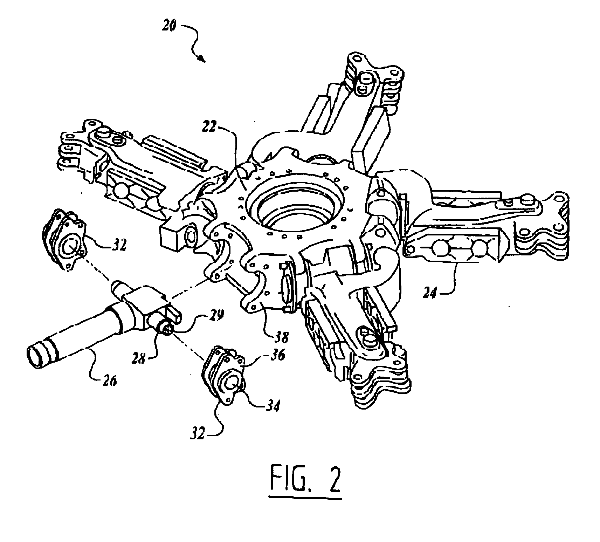

FIGURE 2 depicts a fully articulated hub assembly 20 that includes a pre-loaded, opposed flap bearing assembly 30 that maintains a force couple bearing pre-load path entirely within the flat bearing assembly 30. The hub assembly 20 includes a plurality of rotor assemblies 24 radially attached to a hub center body 22. The articulated hub assembly 20 is designed to allow and to control the flap, pitch and lead-lag motion of an aircraft rotor.

In a presently preferred embodiment, the rotor assembly 24 includes a tie bar 26. However, any other rotor attachment structure or assembly is considered within the scope of the invention. The tie bar 26 is a substantially cylindrical shaped element having a pair of radially opposed journals 28 at an end. Each journal is designed to receive the flap bearing assembly 30. The bearing assembly 30 extends over the journal 28 attaching itself to the journal 28. The tie bar 26 and bearing assembly 30 combination attach the rotor assembly 24 to the hub center body 22.

The flap bearing assembly 30 includes an inboard bearing element 32 and an outboard bearing element 34 contained within an outer housing 42 to form the bearing assembly 30. The outer surface of the outer housing 42 is configured to attach the bearing assembly to another structure, for example, the main rotor hub22. In a presently preferred embodiment, the outer housing 42 includes two pair of radially extending bearing flanges 36 configured to mate with a hub yolk 38 of the hub center body 22. However, any other structure or arrangement for attaching the bearing assembly to the rotor hub located on the outer housing 42 is considered within the scope of this invention, for example, a single pair of projections or molding the outer housing to the hub. A plurality of flange bores 60 align with yolk bores 40 allowing fasteners (not shown) to rigidly attach the structures.

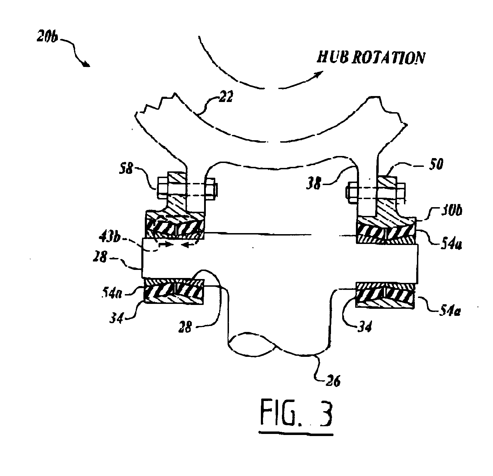

FIGURE 3 depicts an isolated view of the hub assembly 20b of the instant invention. The tie bar 26 is attached to the hub assembly 20b via a pair of bearing assemblies 30b attached to the hub yolk 22 by attachment lug 58. The bearing assemblies 30b extend over and contact each respective journal 28. Each bearing assembly 30 includes a mated set of opposed, taper conical elastomeric bearing elements, 32 and 34, enclosed within an outer housing 42b. When preloaded in the axial direction, the opposed bearing assembly 30b limits the force couple to each individual bearing assembly 30b. According to the invention, the force couple is not passed through the hub center body. The force couple yields a bearing pre-load path 43b that remains entirely within each respective bearing assembly 30b.

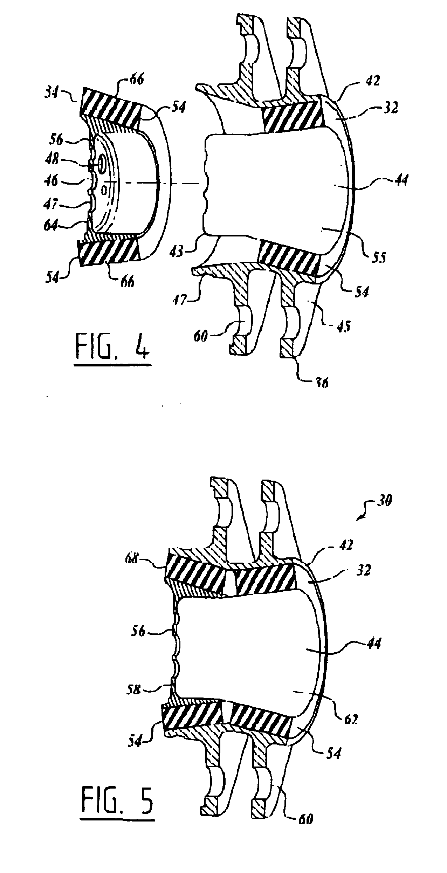

FIGURE 4 depicts an exploded view of the flap bearing assembly 30b. The bearing assembly 30 includes an outboard bearing element 34 and an inboard bearing element 32 disposed within an outer housing 42b. The outer housing 42 includes a first section 45 and a second section 47.

The first section 45 includes a pair of radially extending flange sections 36. The flange sections 36 are configured to align with the hub yolk 38 (FIG. 1). An inner surface of the first section is shaped to receive the inboard bearing element 32. More specifically, an outer surface of the inboard bearing element 32 is bonded to the inner surface of the outer housing 42b in the first section 45. The bonding method is suitably any commonly known bonding method used in the art.

Disposed inside and adjacent the outer surface of the inboard bearing element 32 is an elastomeric element 54. The composition of the elastomeric element 54 can be any of the commonly employed elastomeric compositions, and is variable based upon the loading requirements of the employment environment. For example, an elastomeric element with a plurality of metal laminates is considered within the scope of this invention.

Positioned on an inner surface of the elastomeric element 54 is an inner race of the inboard bearing element 62. The inner race 62 includes a distal section 63 and a proximal section 65. The outer surface of the inner race 62 is tapered in the direction of the inner bearing element 32. The inner surface of the proximal section 65 forms an axial bore 44 therethrough. The bore 44 is sized to receive the journal 28 through an open end 55 and extends into the distal section 63. The axial bore 44 terminates at an inner race closed end plate 53 located in the distal section 63. An outer surface of the distal section is substantially cylindrically shaped and configured to receive an inner race of the outboard bearing 64.

The outboard bearing element 34 is also a taper conical elastomeric bearing wherein the taper is in an opposing direction to the inboard bearing element 32. The outer surface 66 is configured to bond with the inner surface of the second section 47 of the outer housing 42b. The inner race has an open end to receive the outer distal section 63 of the inboard bearing inner race 62. At another end of the inner race of the outboard bearing 64 is an outer plate 56. Sandwiched between the outer race 66 and inner race 64 is another elastomeric element 54.

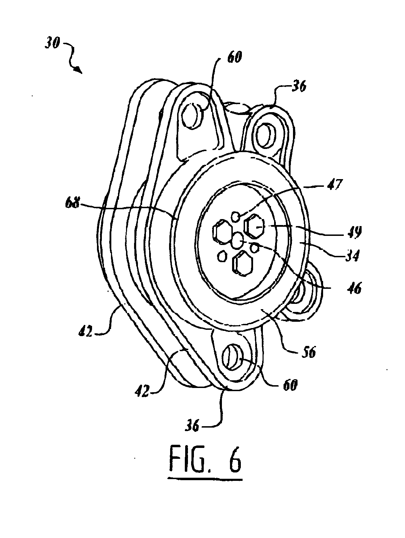

The outer plate and the inner race closed end plate 63 have a plurality of aligned bores extending therethrough. A tie bar attachment bore 46 is centrally disposed through each to receive a tie bar attachment lug (not shown). The tie bar attachment lug maintains the bearing assemblies 30 connection with the tie bar 26. Further, a plurality of coupler bores 48 area disposed through the respective surfaces. Each coupler bore receives a coupler lug 49 (FIG. 6) to maintain the spatial integrity between the inboard and outboard bearing elements. Further, a plurality of dowel bores extend through the respective plates, each bore receiving alignment dowels (not shown) extending from the journal end 29 (FIG. 1).

FIGURE 5 depicts an assembled view of the flap bearing assembly 30. The inboard bearing element 32 and the outboard bearing element 34 are coupled via a friction fit between the respective elements and the bearing coupler lugs 49. More specifically, the inner race of the outboard bearing 64 and the inner race of the inboard bearing 62 are frictionally mated upon insertion of the outboard bearing element 34. Additionally, the outer race of the outboard bearing 66 is bonded to the inner surface of the outer housing 42. Consequently, the outer housing 42 encompasses both the inboard bearing element and the outboard bearing in a single unitary assembly.

FIGURE 6 depicts the assembled flap bearing assembly 30. The bearing assembly includes an outer housing 42 surrounding the inner and outer bearing elements 32 and 34. The outboard bearing assembly 34 is pressure fit into the inboard bearing element 32 and then bonded between the outer race of the outboard baring 66 and an inner surface of the inboard bearing.

As discussed above, bearing coupler lugs 49 are disposed through the bearing coupler bores 48 connecting the outboard bearing element to the inboard bearing element. Additionally, a tie bar attachment bore is axially located through the respective bearing elements and is in alignment with a respective bore in the journal end 29 (see FIGURE 1). An attachment lug 58 (not shown) is disposed through the tie bar attachment bore 46 and mechanically fastened to the journal end 29. Consequently, a bearing integrity redundancy is created by to the two separate coupling structures.

The bearing assembly 30 is axially pre-loaded. In the preferred embodiment, a bearing assembly 30 axial pre-load of 8500-15,000 1b. range is desired. The pre-load helps to prevent the elastomeric elements of the bearing assembly 30 from tensional loading during operating conditions. However, any other pre-load is considered within the scope of this invention. The axial pre-load can be applied through the coupler lugs 49, the tie bar attachment lug (not shown) or combinations thereof.

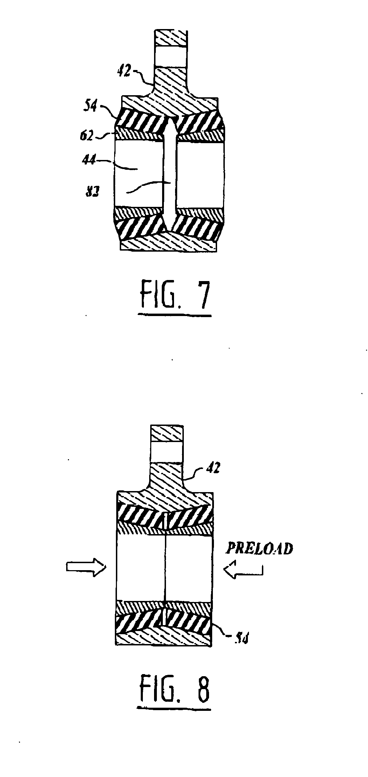

FIGURES 7 and 8 depict an isolated view of the opposed conical elastomeric bearings with and without pre-loading, FIG. 7, and with pre-loading, FIG. 8. A bearing gap 82 is located between the respective inboard and outboard bearing elements, 32 and 34 respectfully, prior to any axial pre-loading. As the axial pre-load is applied the bearing elements, 32 and 34, are brought together. The inner races, 62 and 64, frictionally engage one another and any space, or bearing gap 82, between the bearing elements, 32 and 34 is removed. The bearing elements, 32 and 34, combine within the bearing assembly 30 to carry the flap-wise motion of the rotor assembly 24.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

### Method of forming opposing internally preloaded conical elastomeric bearing assembly

### RELATED APPLICATION

This application incorporates "Opposing Conical Elastomeric Bearing Assembly,"

### Field of the Invention

This invention relates generally to the field of forming elastomeric bearing assemblies and specifically to forming preloaded elastomeric bearing assemblies.

### BACKGROUND OF THE INVENTION

A key component of a helicopter is the main rotor hub. It provides attachment of the main rotor blades during operation. Rotational power is delivered to the main rotor hub to provide rotational velocity to the blades in order to create aerodynamic lift. The main rotor hub must allow for rotational motion of the blades in the vertical (flap), horizontal (lead-lag), and axial (pitch) directions near the blade root attachment with the hub to accommodate flight control authority and dynamic stability. Main rotor hub systems that accommodate these motions with discrete hinge mechanisms are referred to as fully articulated hubs. Through out the history of the helicopter, engineers have struggled to provide these rotational freedoms with bearing systems that can accommodate high frequency and high amplitude oscillatory motion under high trust loading created by the centrifugal force of the rotating blades. Elastomeric bearings have become an industry standard for accommodating flapwise motion in articulated hub systems. These bearings are composed of elastomeric material that allows for shear compliance within the elastomer for rotational freedom while reacting radial centrifugal force in compression.

Elastomeric conical bearings are commonly used in bearing assemblies for helicopter rotor systems to control rotor motion. The bearing assemblies are axially preloaded to prevent the conical bearing elements from experiencing a resultant tensional load. Currently, mono-directional bearing elements are employed at each attachment site of the main rotor hub. The prior art design creates an extended force couple resulting in a bearing pre-load path extending through the main rotor hub center body. The hub center body must be designed to carry the extra loading. The extra design requirements add weight to the overall rotor hub reducing the aircraft's load capacity and fuel efficiency.

### SUMMARY OF THE INVENTION

The invention provides a method of efficiently forming a flap bearing assembly for rotary aircraft. A method of producing an elastomeric conical flap bearing assembly for rotary aircraft includes disposing an inboard bearing element and outboard bearing element within an outer housing. The outer housing has an outer surface configured with a plurality of radially extending flange elements. The outer housing has an inner surface configured to receive tapered conical bearing elements. A tapered conical elastomeric inboard bearing element is inserted into its outer housing and is bonded to the inner surface. Also, a tapered conical elastomeric outboard bearing element is inserted into the outer housing, wherein the conical tapers of the respective bearing elements are directed in opposing directions. The bearing elements are press-fit together and the outer surface of the outboard bearing is bonded to the inner surface of the outer housing forming a bearing assembly. Simultaneously, an axial pre-load is applied to the bearing assembly. A plurality of bearing coupler lugs are attached to the bearing assembly.

The proposed invention provides a unique flap bearing arrangement by localizing the pre-load within each flap bearing assembly and, thus, eliminates the necessity for the transfer of the pre-load through the hub structure. The elimination of bearing pre-load through the hub structure significantly reduces weight of the rotor hub assembly. Many components, including the bearing attachment flanges on the hub center body as well as the bearing housings can be configured to accommodate only the design flight and static loads without having to carry the off axis bearing pre-loads. The unique design of the instant invention yields a 60 to 100 pound weight reduction of the main rotor hub.

### Brief Description of the Drawings

The preferred and alternative embodiments of the present invention are described in detail below with reference to the following drawings.

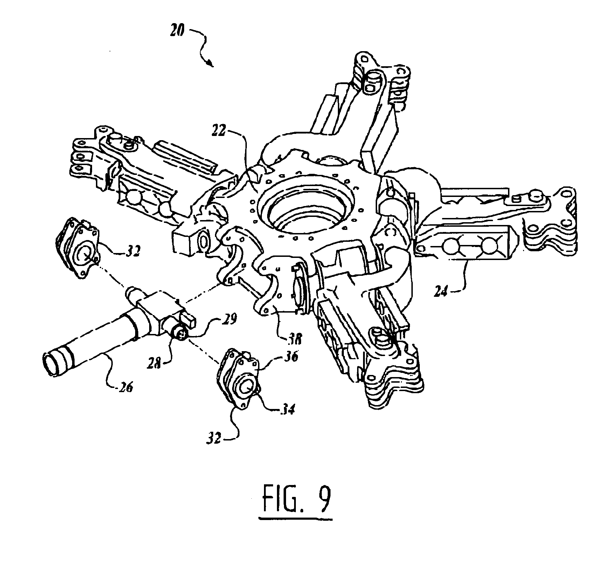

FIGURE 9 is an isometric view of an articulated hub assembly;

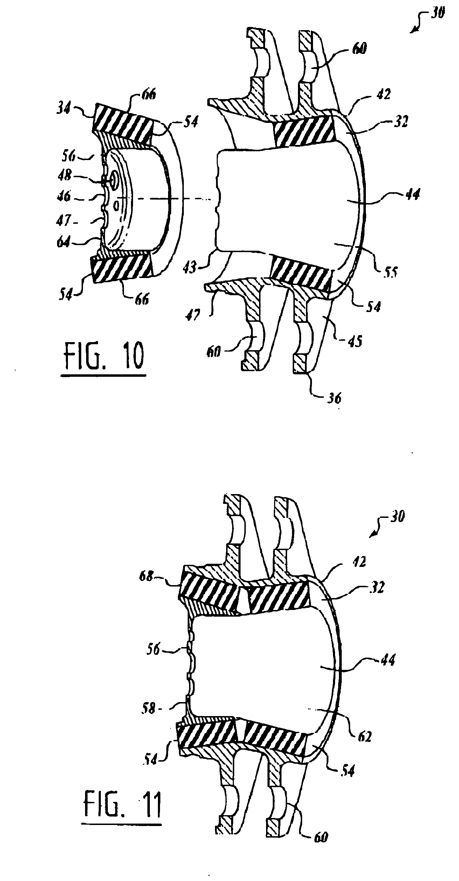

FIGURE 10 is an exploded view of the bearing assembly;
FIGURE 11 is an isometric view of the bearing assembly; and,

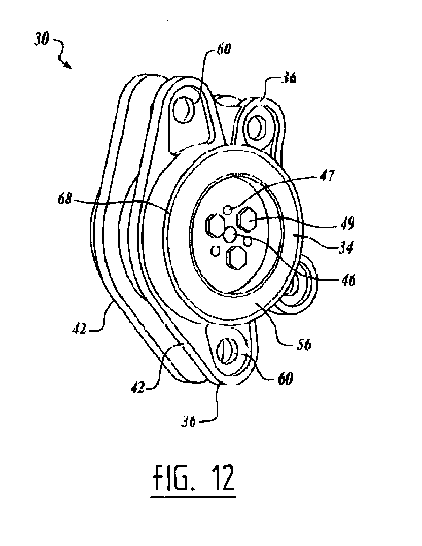

FIGURE 12 is an alternative isometric view of the bearing assembly.

### Detailed Description of the Invention

FIGURE 9 depicts a fully articulated hub assembly 20 that includes a pre-loaded, opposed flat bearing assembly 30 that maintains a force couple bearing pre-load path entirely within the flat bearing assembly 30. The hub assembly 20 includes a plurality of rotor assemblies 24 radially attached to a hub center body 22. The articulated hub assembly 20 is designed to allow and to control the flap, pitch and lead-lag motion of an aircraft rotor.

In a presently preferred embodiment, the rotor assembly 24 includes a tie bar 26. The tie bar 26 is a substantially cylindrical shaped element with having a pair of radially opposed tie bar journals 28 at an end. Each tie bar journal is designed to receive the flap bearing assembly 30. The bearing assembly 30 extends over the journal 28 attaching itself to the journal 28 via a plurality of alignment dowels and a tie bar attachment lug (not shown). The tie bar 26 and bearing assembly 30 combination attach the rotor assembly 24 to the hub center body 22 and control flap motion of the rotor assembly 24.

The flap bearing assembly 30 includes an inboard bearing element 32 and an outboard bearing element 34 contained within an outer housing 42 to form the bearing assembly 30. The outer housing 42 includes two pair of radially extending bearing flanges 36 configured to mate with a hub yolk 38 of the hub center body 22. A plurality of flange bores 60 align with yolk bores 40 allowing fasteners (not shown) to rigidly attach the structures.

FIGURE 10 depicts an exploded view of the flap bearing assembly 30b. The bearing assembly 30 includes an outboard bearing element 34 and an inboard bearing element 32 disposed within an outer housing 42b. The outer housing 42 includes a first section 45 and a second section 47.

The manufacture of the bearing assembly is a several step process. Initially, a primary bond is created within each bearing element. More specifically, the inner and outer race of each bearing element, 62 and 67 respectively for the inboard bearing element, 64 and 66 for the outboard bearing element, is bonded to an elastomeric element 54 disposed between the inner and outer race of each bearing element. The primary bond adheres the race elements directly to the elastomeric element 54. In a presently preferred embodiment, the primary bond is created by injecting the elastomeric element into a mold created by the placement of the respective race elements. Upon solidification of the injected elastomeric material the primary bond is formed. However, other primary bond methods are considered within the scope of this invention. Once the primary bond is created between the inner race and the outer race of inboard bearing element 32 and the outboard bearing element 34 the respective bearing elements are ready for the next process.

The inboard bearing element 32 is inserted into a first section 45 of the outer housing 42b. The inboard bearing element 32 is inserted with the conical taper directed toward a second section 47 of the outer housing. Upon inserting of the internal bearing element 32, the inner race of the inboard bearing element 62 extends a distance into an area of the second section 47.

Upon insertion or slightly thereafter, a secondary bond is created between the outer race of the inboard bearing element 67 and an inner surface of the outer housing 42b. In the preferred embodiment, the secondary bond is an adhesion. However, any other bond commonly known in the art is considered within the scope of this invention.

FIGURE 11 depicts another view of the bearing assembly 40. The outboard bearing element 34 is inserted into the second section 47 of the outer housing 42b. The outboard bearing element 34 is inserted with the conical taper directed toward the inboard bearing element 32, thus creating an opposed bearing couple.

The insertion of the outboard bearing 34 into the outer housing 42b yields several occurrences. First, the inner race of the outboard bearing element 64 is pressure fit into the inner race of the outboard bearing element 64. Simultaneously, another secondary bond, similar to the other secondary bond, is created between the outer race of the outboard bearing 66 and an inner surface of the outer housing 42b. Also, simultaneously, the bearing pre-load is applied to the bearing assembly. The bearing pre-load is preferably about 8,500 to about 15,000 pounds. However, any pre-load range is considered within the scope of this invention. At this point, the bearing assembly is nearly complete.

FIGURE 12 depicts a completed assembly view of the bearing assembly 30 as viewed in the direction of the taper of the outboard bearing element 34. More specifically, a plurality of bearing coupler lugs 49 are employed to help maintain the bearing assembly 30 integrity. In the preferred embodiment, three coupler lugs 49 are employed with the bearing assembly. However, any number of coupler lugs are employable with this invention.

The coupler lugs 49 serve two primary purposes. First, the lugs 49 serve as a redundant secondary bond 68. More specifically, the lugs 49 assist the secondary bond in carrying the axial pre-load. Secondly, the lugs 49 prevent any rotational displacement of the respective bearing elements.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. Method of forming a fully articulated rotary hub assembly for rotary aircraft, comprising:
- forming a hub center body (22) including a plurality of attachment sections positioned about a periphery of the hub center body (22), the attachments sections being configured to receive a plurality of bearing assemblies (30), creating a plurality of rotor assemblies (24) including a tie bar (26) having a pair of tie bar journal sections (28) configured to be inserted into the bearing assemblies (30);
- forming a internally preloaded bearing assembly (30) including an outer housing (42) having an outer surface and an inner surface, the outer surface being configured with a plurality of radially extending flange sections (36) configured to attach to the attachment sections of the hub center body (22), the inner surface being configured to receive a pair of opposed taper conical elastomeric bearing elements (32, 34), each bearing element (32, 34) having an inner race (62, 64) and an outer race (66, 67), each inner race (63, 64) forming an end plate (53, 56), wherein the inner races are configured to receive the tie bar journal sections (28) of the rotor assembly (24);
- inserting the tie bar journal section (28) of the rotor assembly (24) into the bearing assembly (30); and
- connecting the flange sections (36) of the bearing assembly (30) to the attachment sections of the hub center body (22).

2. Method according to claim 1, further comprising axially pre-loading the bearing elements (32, 34) within the bearing assembly (30).

3. Method according to claim 2, wherein the axial pre-load is in a range from about 3855 kg (8,500 pounds) to about 6804 kg (15,000 pounds).

4. Method according to claim 1, wherein the outer races (66, 67) of the bearing elements (32, 34) are bonded to the inner surface of the outer housing (42).

5. Method according to claim 4, wherein the bond is an adhesion bond.

6. Method according to claim 1, wherein the inner race (62) of one bearing element (32) is frictionally attached to the inner race (64) of the other bearing element (34).

7. Method according to claim 1, further comprising fastening the bearing assembly (30) to the tie bar journal (28) by a fastener extending axially through the bearing assembly (30) and into an end (29) of the tie bar journal (28).

8. Method according to claim 7, wherein the fastener is a bolt.

9. Method according to claim 1, wherein the bearing assembly (30) allows for flap motion of the rotor assembly (24) relative to the hub center body (22).

10. Method according to claim 1, further comprising connecting the respective bearing elements (32, 34) to each other by a plurality of bearing element fasteners extending through the end plates (53, 56) of each inner race (62, 64).

11. Method according to claim 10, wherein the fasteners are bolts.

12. Rotary aircraft elastomeric bearing assembly, comprising:
- an outer housing (42) having a first section (45) and a second section (47);
- a tapered conical inboard bearing element (32) disposed within the first section (45), a taper of the inboard bearing being inwardly directed; and
- a tapered conical outboard bearing element (34) disposed within the second section (47), a taper of the outboard bearing being inwardly directed in a direction that is substantially directly opposed to the inboard bearing taper, wherein an axial pre-load is applied through the opposed inboard bearing element (32) and the outboard bearing element (34).

13. Bearing assembly according to claim 12, further comprising a plurality of flange sections (36) extending from the outer housing (42).

14. Bearing assembly according to claim 12, further comprising an elastomeric element (54) within the inboard bearing element (32).

15. Bearing assembly according to claim 12, further comprising an elastomeric element (54) within the outboard bearing element (34).

16. Bearing assembly according to claim 12, wherein an outer surface of the inboard bearing element (32) is bonded to an inner surface of the outer housing (42).

17. Bearing assembly according to claim 12, wherein an outer surface of the outboard bearing element (34) is bonded to an inner surface of the outer housing (42).

18. Bearing assembly according to claim 12, wherein the inner race (62) of the inboard bearing element (32) and the inner race (64) of the outboard bearing element (34) are configured to receive a journal (28).

19. Bearing assembly according to claim 12, wherein the axial pre-load is about 3855 kg (8,500 pounds) to about 6804 kg (15,000 pounds).

20. Rotary aircraft opposed tapered conical elastomeric flap bearing assembly, comprising:
- an outer housing (42) defining a first (45) and a second section (47), the outer housing (42) having an outer surface configured to attach to a hub center body (22) and an inner surface configured to receive a set of opposed taper conical bearing elements (32, 34);
- a tapered conical inboard bearing element (32) having an outer race (64) and an inner race (62), the outer race (64) being bonded to the inner surface of the outer housing (42) and the inner race (62) having an extended portion defining a closed end plate (53), the closed end plate (53) defining a plurality of bores there through;
- a tapered conical outboard bearing element (34) having an outer race (66) and an inner race (64), the outer race (66) being bonded to the inner surface of the outer housing (42) and the inner race (64) being frictionally engaged with the extended portion of the inner race (62) of the inboard bearing element (32), the inner race (64) of the outboard bearing element (34) forming an outer plate (56) defining a plurality of bores (46, 48) therethrough, wherein an axial pre-load is applied to the inboard bearing element (32) and the outboard bearing element (34); and
- at least one bearing coupler lug (49) connecting the bearing elements (32, 34).

21. Bearing assembly according to claim 20, wherein the pre-load is in a range from about 3855 kg (8,500 pounds) to about 6804 kg (15,000 pounds).

22. Bearing assembly according to claim 20, wherein the plurality of bores defined through the respective inner races includes at least one of an axial bore (44), a bearing coupler bore (48) and a dowel bore.

23. Bearing assembly according to claim 20, further comprising an elastomeric element (54) within the inboard bearing element (32).

24. Bearing assembly according to claim 20, further comprising an elastomeric element (54) within the outboard bearing element (34).

25. Rotary aircraft fully articulated hub assembly, comprising:
- a hub center body (22) including a plurality of attachment sections, configured to receive a plurality of bearing assemblies (30), positioned about a periphery of the hub center body (22);
- a plurality of rotor assemblies (24) configured to receive a pair of bearing assemblies (30); and
- a plurality of bearing assemblies (30) including an outer housing (42) having an outer surface and an inner surface, the outer surface configured to mechanically connect the bearing assembly (30) to the attachment sections of the hub center body (22), the inner surface being configured to receive a pair of taper conical elastomeric bearing elements (32, 34), each bearing element (32, 34) having an inner race (62, 64) and an outer race (66, 67), an axial pre-load being applied through the inboard bearing element (32) and the outboard bearing element (34), the respective inner race bearing elements being configured to receive a portion of the rotor assemblies.

26. Hub assembly according to claim 25, wherein the axial pre-load is in a range from about 3855 kg (8,500 pounds) to about 6804 kg (15,000 pounds).

27. Hub assembly according to claim 25, wherein the outer race (66, 67) of each bearing element is bonded to the inner surface of the outer housing(42).

28. Hub assembly according to claim 25 wherein the inner race (62) of one bearing element (32) frictionally engages the inner race (64) of the other bearing element (34).

29. Hub assembly according to claim 25, further comprising closed end plates (53, 56) formed by the respective inner races (62, 64) of the inboard bearing element (32) and the outboard bearing element (34).

30. Hub assembly according to claim 29, further comprising a plurality of bearing coupler lugs (49) connecting the inboard bearing element (32) and the outboard bearing element (34) within the outer housing (42).

31. Hub assembly according to claim 29 further comprising a tie bar attachment lug (58) centrally disposed through the closed end plates (53, 56) connecting the bearing assembly (30) to the rotor assembly (24).

32. Method of forming an internally preloaded opposing conical elastomeric bearing assembly, comprising:
- forming an inboard bearing element (32), the inboard bearing element (32) including an inner race (62) primarily bonded to an elastomeric element (54) and an outer race (66) primarily bonded to the elastomeric element (54);
- forming an outboard bearing element (34), the outboard bearing element (34) including an inner race (64) primarily bonded to an elastomeric element (54) and an outer race (67) primarily bonded to the elastomeric element (54);
- forming an outer housing (42), the outer housing (42) having an outer surface and an inner surface, the outer surface having a plurality of flange sections (36) extending radially from the outer surface, the inner surface configured to receive inboard (32) and the outboard bearing elements (34);
- inserting the inboard bearing element (32) into the outer housing (42);
- bonding the outer race (67) of the inboard bearing element (32) to the inner surface of the outer housing (42) to form a first secondary bond;
- inserting the outboard bearing element (34) into the outer housing (42) such that a frictional connection is achieved between the inner race (62) of the inboard bearing element (32) and the inner race (64) of the outboard element (34);
- bonding the outer race of the outboard bearing element (66) to the inner surface of the outer housing (42) to form a second secondary bond;
- pressing the inboard bearing element (32) and the outboard bearing element (34) together to create an axial pre-load; and
- attaching a plurality of bearing coupler lugs (49) axially through the inboard bearing element (32) and the outboard bearing element (34).

33. Method according to claim 32, wherein the first and second, secondary bonds are adhesion bonds.

34. Method according to claim 32, wherein pressing the outboard bearing element (34) further comprises:
joining the inner race (62) of the inboard bearing element (32) with the inner race (64) of the outboard bearing element (34) by a friction fit.

35. Method according to claim 32, wherein the axial pre-load is in a range from about 3855 kg (8,500 pounds) to about 6804 kg (15,000 pounds).

36. Method according to claim 32, wherein the bearing assembly (30) is a rotary aircraft flap bearing assembly.

37. Method of forming an internally preloaded opposing conical elastomeric bearing assembly, comprising:
- forming an outer housing (42) having a first section (45) and a second section (47), the outer housing (42) including an outer surface having a plurality of flange portions (36) radially extending therefrom, the outer housing (42) including an inner surface configured to receive a bearing element (32) in the first section (45) and a bearing element (34) in the second section (47);
- forming a tapered conical bearing element (32) including an outer race (67) primarily bonded to an elastomeric element (54) and an inner race (62) primarily bonded to the elastomeric element (54), the inner race (62) including an extended portion extending beyond the elastomeric element (54) and having a closed end (53);
- inserting the inboard bearing element (32) into the first section of the outer housing (45), the conical taper bearing element (52) being inwardly directed;
- bonding the outer race (67) of the inboard bearing element (32) to the inner surface of the outer housing (42) in the first section (45) to form a first secondary bond;
- forming a tapered conical outboard bearing element (34), the bearing element (34) including an outer race (66) primarily bonded to an elastomeric element (54) and an inner race (64) primarily bonded to the elastomeric element (34), the inner race (64) including a receiving portion mated to receive the extended portion of the inner race (62) of the inboard bearing (32), the inner race (64) forming an outer plate (56);
- inserting the outboard bearing element (34) into the second section (47) of the outer housing (42), the conical taper bearing element (52) being inwardly directed, taper directions of the inserted bearing elements (32, 34) opposing one another and respective inner races (62, 64) frictionally engaging one another, an axial pre-load being applied to the bearing elements (32, 34);
- bonding the outer race (66) of the outboard bearing element (34) to the inner surface of the outer housing (42) in the first section (45) to form a second secondary bond; and
- connecting the respective bearing element with a plurality of bearing coupler lugs (49).

38. Method according to claim 37, wherein the first and second secondary bonds are adhesion bonds.

39. Method according to claim 37, wherein the axial pre-load is in a range from about 3855 kg (8,500 pounds) to about 6804 kg (15,000 pounds).

40. Method according to Claim 37, wherein the bearing assembly (30) is a rotary aircraft flap bearing assembly.
